# EUROPEAN PATENT APPLICATION

(11) **EP 1 076 045 A2**
(43) Date of publication of application: **14.02.2001**
(21) Application number: 00306520.8
(22) Date of filing: 31.07.2000
(51) Int. Cl.: C03B 37/027

(54) **Apparatus for cooling an optical fibre drawn from a preform**

(30) Priority: 09.08.1999 US 383514
(71) Applicant: LUCENT TECHNOLOGIES INC., Murray Hill, New Jersey 07974-0636 (US)
(72) Inventor: Day, Ray-Long, Alpharetta, Georgia 30005 (US); Garner Huff, Richard, Califon, New Jersey 07830 (US); Lynch, Brian, Norcross, Georgia 30071 (US)
(74) Representative: Watts, Christopher Malcolm Kelway, Dr.

(57) **Abstract**

Embodiments of the invention include an apparatus and method for drawing optical waveguide fiber. The apparatus includes a furnace for heating an optical waveguide preform passing therethrough and a cooling chamber coupled to the furnace for cooling optical waveguide fiber drawn from the preform after it passes through the furnace. The cooling chamber is configured to allow passage therethrough of a glob of molten glass formed by the molten end of the heated preform prior to the formation of optical waveguide fiber. Alternatively, the apparatus also includes a transitional cooling tube for additional cooling of the drawn waveguide fiber and for coupling an annealer to the cooling chamber that likewise is configured to allow passage of the formed glob of softened glass. The method for drawing optical fiber comprises heating an optical fiber preform in a furnace as the preform passes therethrough, drawing optical waveguide fiber from the heated preform, and cooling optical waveguide fiber as it exits the furnace by passing it through a cooling chamber extending downward from the furnace. Unlike conventional cooling chambers, the cooling chamber is configured to allow passage therethrough of the glob of molten glass formed by the molten end of the heated preform prior to formation of optical waveguide fiber.

## Description

### Background of the Invention

### 1. Field of the Invention

The invention relates to apparatus and methods for making optical fiber. More particularly, the invention relates to apparatus and methods for making optical fiber having relatively low bow.

### 2. Description of the Related Art

Devices and methods for drawing optical waveguide fibers from optical waveguide preforms are well established. In general, devices typically include a heat source for softening the preform, a fiber diameter measurement device, a unit for applying protective coatings to the fiber, and a fiber take up unit.

Optical waveguide fibers typically are formed by vertically suspending the preform and moving it into the furnace at a controlled rate. The preform softens in the furnace and optical fiber is drawn from the molten end of the preform rod by a capstan located at the base of the fiber drawing device.

Although optical fiber drawing devices and methods have existed for years and refinements have been made, shortcomings still remain and thus solutions continue to be sought. For example, differential cooling of the drawn optical fiber before the viscosity of the cladding layer of the fiber is high enough to substantially prevent differential stresses in the drawn fiber often causes the fiber to bend. This bending, or fiber "bow," causes difficulty, for example, when the fiber is spliced to other fibers, resulting in high loss splices. Attempts to overcome fiber bow are disclosed, for example, in U.S. Patent No. 5,284,499.

Another existing shortcoming of conventional fiber drawing devices and methods is the disposition of the glob of molten glass initially formed by the preform passing through the furnace. Conventionally, an operator removes the glob after it passes through a cooling chamber coupled to the end of the furnace and feeds or threads the remaining drawn fiber through to the other stages of the drawing device. However, such remedy is labor intensive and does not lend itself well to an otherwise automated process.

Therefore, it would be desirable to have an apparatus and method for drawing optical fiber that overcomes this shortcoming of conventional devices and techniques.

### Summary of the Invention

The invention is as defined by the claims. Embodiments of the invention include an apparatus and method for drawing optical waveguide fibers. The apparatus comprises a furnace for heating an optical waveguide preform passing therethrough and a cooling chamber coupled to the furnace for cooling optical fiber drawn from the preform after it passes through the furnace. According to embodiments of the invention, the cooling chamber is configured to allow passage therethrough of a glob of molten glass formed by the molten end of the heated preform prior to the formation of the optical fiber and having a diameter substantially larger than that of the optical fiber. Alternatively, the apparatus also includes a transitional cooling tube for additional cooling of the drawn waveguide fiber and for coupling an annealer to the cooling chamber. Like the cooling chamber, the transitional cooling tube also is configured to allow passage therethrough of the glob of molten glass formed by the molten end of the heated preform. The cooling chamber and the transitional cooling tube are configured as a plurality of sections that are separated, for example, by an actuator, to increase the cross-sectional area between the sections around the travel path of the optical fiber to allow passage therethrough of the initial glob of molten glass.

According to embodiments of the invention, the method for drawing an optical waveguide fiber comprises providing an optical fiber preform, heating the preform in a furnace as the preform passes therethrough and drawing an optical fiber from the heated preform. The method also comprises cooling the optical fiber exiting the furnace by passing it through a cooling chamber extending downward from the furnace. Unlike conventional cooling chambers, the cooling chamber according to embodiments of the invention is configured to allow passage therethrough of a glob of molten glass formed by the heated preform prior to the formation of the optical fiber and having a diameter larger than that of the optical fiber.

### Brief Description of the Drawings

In the drawings:
Fig. 1 is a schematic diagram of a device for drawing optical waveguide fiber according to a conventional arrangement;
Fig. 2 is a front, sectional view of a device for drawing optical waveguide fiber according to embodiments of the invention;
Fig. 3a is a front, sectional view of the upper and lower cooling chambers according to embodiments of the invention showing the cooling chamber sections together;
Fig. 3b is a perspective view of the upper and lower cooling chambers according to embodiments of the invention showing the cooling chamber sections separated;
Fig. 4 is a front, sectional view of the device of Fig. 2, showing a portion of the annealer including the transitional cooling tube; and
Fig. 5 is a simplified block diagram of a method for drawing optical waveguide fiber according to embodiments of the invention.

### Detailed Description

In the following description similar components are referred to by the same reference numeral in order to enhance the understanding of the invention through the description of the drawings.

Although specific features, configurations and arrangements are discussed hereinbelow, it should be understood that such is done for illustrative purposes only. A person skilled in the relevant art will recognize that other steps, configurations and arrangements are useful without departing from the scope of the invention.

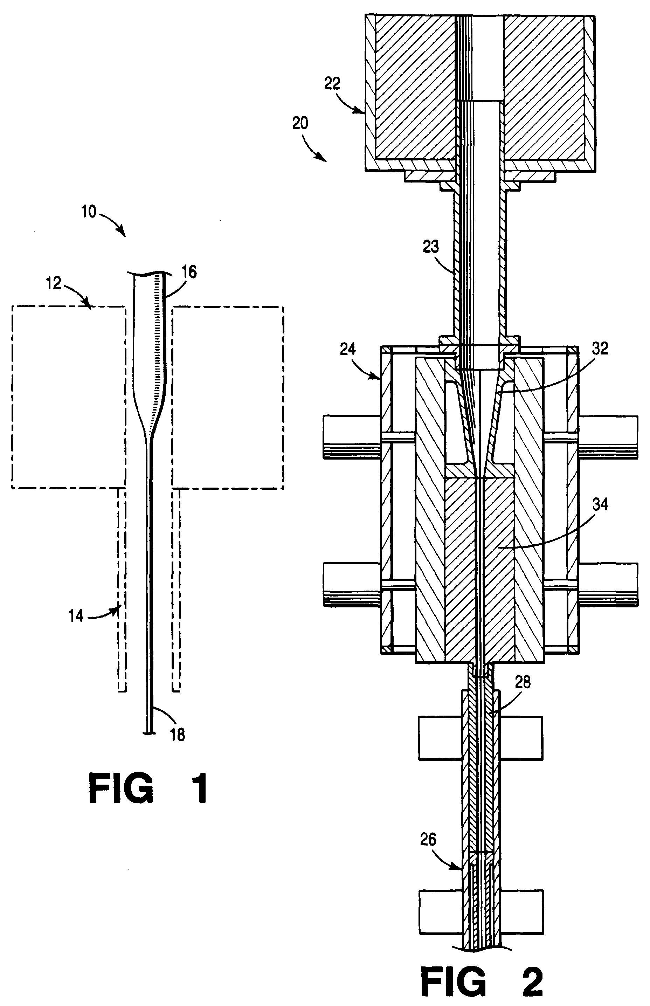

Referring now to Fig. 1, a conventional optical waveguide fiber drawing apparatus 10 is shown. The apparatus 10 generally comprises a furnace 12 and a cooling chamber 14. Conventionally, the furnace 12 is, for example, a tubular structure having a 12 inch (305 millimeter) long, 16 inch (406 mm) diameter water-cooled copper shell that surrounds a zirconia heating element or susceptor with an inner diameter of approximately 80 millimeters (mm). The cooling chamber is attached to the bottom of the furnace, by any suitable means. Conventionally, the cooling chamber 14 is approximately 10 inches (254 mm) long and includes a water-cooled stainless steel jacket surrounding a silica tube having an outside diameter of approximately 75 mm and an inside diameter of approximately 70 mm.

Typically, an optical waveguide preform 16 is suspended vertically and heated at one end as the preform 16 is moved through the furnace 12 at a controlled rate. The furnace 12 heats the end of the preform 16 to approximately 2000-2200° Celsius, which causes the heated end of the preform 16 to soften as the preform 16 moves through the furnace 12. An optical waveguide fiber 18 is drawn from the softened end of the preform 12 by a capstan or other appropriate components (not shown) located at the base of the fiber drawing device 10.

The drawn optical fiber 18, upon exiting the furnace 12, passes through the cooling chamber 14 to be cooled to approximately 1000-1300° Celsius. The cooled optical fiber then passes through an annealer (not shown) and on through to the coating unit and other remaining stages (not shown) of the fiber drawing device 10.

As mentioned previously herein, problems associated with less than ideal cooling arrangements and techniques include the introduction of fiber bending or "bow". As discussed previously herein, attempts to overcome fiber bow are disclosed, for example, in U.S. Patent No. 5,284,499.

Conventional cooling chambers typically are not dimensioned to allow passage therethrough of certain portions of the drawn optical fiber, namely the glob of molten glass initially formed at the heated end of the preform. As is known, as the heated end of the preform softens to the point where optical fiber can be drawn therefrom, the initial portion of the softened glass takes the shape of a relatively large glob of softened glass followed by a progressively thinner stream of molten glass that eventually is sized on the order of a typical core and cladding region, for example, approximately 125 microns (µm) in diameter. Passage of this glob conventional is known as "the drop".

Many conventional furnaces and cooling chambers are shaped, for example, as shown in Fig. 1, and thus are dimensioned sufficiently large to accommodate the drop. Also, conventionally, an air gap typically exists between the exit end of the cooling chamber and the remaining stages of the drawing device, which allows an operator to remove the glob after it passes through the cooling chamber and to feed the resulting drawn optical fiber into the next stage of the drawing device. However, as mentioned hereinabove, such activity is labor intensive and introduces inefficiencies into an otherwise relatively efficient, automated process.

According to embodiments of the invention, an optical waveguide fiber drawing device includes a cooling chamber that advantageously is shaped for reducing fiber bow but also is variably dimensioned to allow for passage therethrough of the glob during the drop. Also, according to embodiments of the invention, the air gap that conventionally exists between the exit end of the cooling chamber and the remaining stages of the drawing device has been eliminated to further reduce fiber bow. Also, other stages of the fiber drawing device, for example, the annealer and an additional or transitional cooling tube between the cooling chamber and the annealer are variably dimensioned to allow for passage therethrough of the glob during the drop.

Referring now to Fig. 2, a front, sectional view of a portion of an optical waveguide or fiber drawing device 20 according to embodiments of the invention is shown. The optical waveguide fiber drawing apparatus 20 includes a furnace 22, a post-chamber 23, a cooling chamber 24, and an annealer 26 having a transitional cooling tube portion 28, all positioned around the path of fiber travel. The furnace 22 is, for example, similar to the furnace 12 shown in Fig. 1 and described hereinabove. That is, the furnace 22 is, for example, a tubular structure having a 12 inch (305 millimeter) long, 16 inch (406 mm) diameter water-cooled copper shell that surrounds a zirconia heating element or susceptor with an inner diameter of approximately 80 millimeters (mm). The cooling chamber 24, which is coupled to the furnace 22 via the post-chamber 23, includes, for example, an upper cooling chamber 32 and a lower cooling chamber 34. The post-chamber 23 provides a leak-tight seal between the furnace 22 and the cooling chamber 24.

According to embodiments of the invention, the upper cooling chamber 32 is, for example, a conical section made of, for example, stainless steel, and having an inner diameter that varies from approximately 70 mm down to approximately 12-13 mm. Furthermore, the lower cooling chamber 34 is, for example, a tubular structure made of, for example, stainless steel, and having a typical length of approximately 330 mm and an inner diameter of approximately 12-13 mm. Both the upper cooling chamber 32 and the lower cooling chamber 34 are cooled, for example, by self-contained water cooling arrangements.

Also, according to embodiments of the invention, the cooling chamber 24 is configured to be variably dimensioned around the path of fiber travel. For example, the upper cooling chamber 32 is formed by a plurality of sections that come together around the path of fiber travel in a conventional arrangement but also separate from one another in a manner that increases the cross-sectional area between the cooling chamber sections around the path of fiber travel. The sections have their own self-contained, water-cooling systems. Similarly, the lower cooling chamber 34 is configured to vary its cross-sectional area around the fiber travel path. In this manner, the upper and lower cooling chambers are modified briefly to allow passage of the glob during the drop.

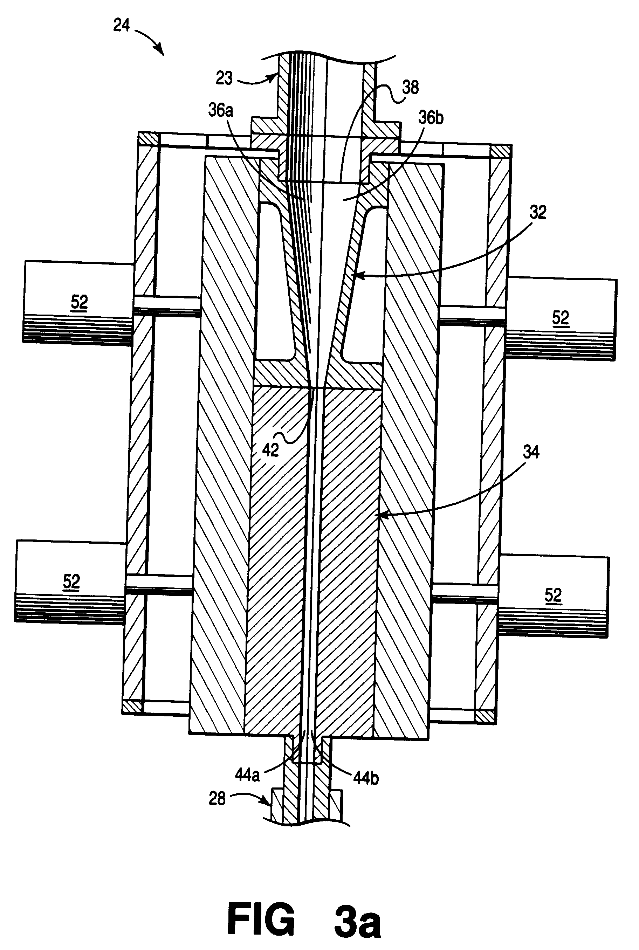

Referring now to Fig. 3a, in one embodiment, the upper cooling chamber 32 portion of the cooling chamber 24 includes two generally tapered, semicircular-shaped sections 36a, 36b. When coupled together, as shown, the sections 36a, 36b form a conical body having an inner diameter that varies from approximately 70 mm at a first end 38 to approximately 12-13 mm at a second end 42. The lower cooling chamber 34, which couples to the second end 42 of the upper cooling chamber 32, also includes a pair of sections 44a, 44b that together form the lower cooling chamber 34. According to alternative embodiments of the invention, the upper and/or lower cooling chambers are formed by more than two sections.

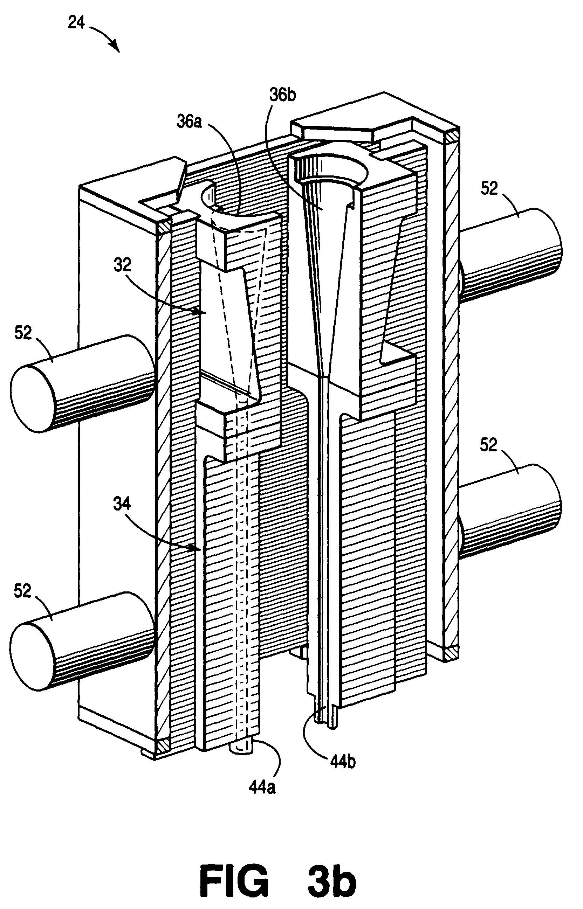

Referring now to Fig. 3b, according to embodiments of the invention, the sections 36a and 36b of the upper cooling chamber 32 are separable from one another so that the cross-sectional area between the sections is increased. Also, the sections 44a and 44b of the lower cooling chamber 34 are separable, for example, in a similar manner. The fiber drawing device is configured, for example, to open the upper and lower chambers simultaneously or, in alternative embodiments, separately. The upper cooling chamber 32 and the lower cooling chamber 34, which usually accommodate a drawn optical fiber having a diameter no larger than approximately 125 µm are expanded approximately 4 inches each (for example, each section of the chamber moves laterally approximately 2 inches) to accommodate the glob of molten glass.

Thus, in operation, as the preform 16 enters the furnace 22 and one end of the preform 16 is heated, the cooling chamber 24 moves between a generally closed position (Fig. 3a), in which the sections are positioned together to form a conical chamber, and a generally open position (Fig. 3b) in which the sections are positioned apart from one another. In this manner, the cooling chamber 24, which in the closed position has a cross-sectional area dimensioned to allow passage of a drawn optical fiber but not the initially-formed glob of molten glass, separates sufficiently to allow passage therethrough of the glob formed by the heated end of the preform. Once the drop has occurred and the glob has passed through the cooling chamber 24, the separated sections of the cooling chamber 24 are restored to their typical operating position, that is, closed together to form the conical upper cooling chamber 32 and the tubular lower cooling chamber 34, as discussed hereinabove.

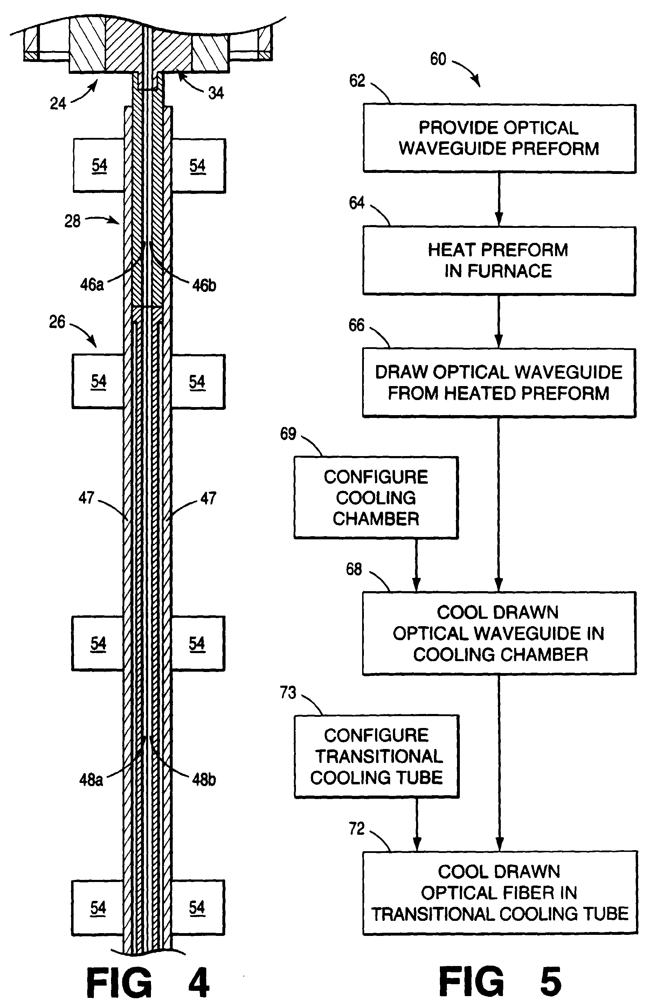

In addition to having a separable upper cooling chamber 32 and lower cooling chamber 34, embodiments of the invention include other separable components, for example, the annealer 26 and its transitional cooling tube portion 28. Referring now to Fig. 4, shown generally is a portion of the annealer 26, including its transitional cooling tube 28. As discussed hereinabove, the transitional cooling tube 28 couples the lower cooling chamber 34 to the rest of the annealer 26 in a manner that provides a leak-tight seal therebetween. Typically, the transitional cooling tube 28 has at least one water-cooled jacket or other appropriate cooling means to assist in retaining sealing integrity between components and to provide additional operator safety.

The annealer 26 is a generally rectangular structure made of, for example, aluminum, and having a typical length of approximately 1500 mm and a typical inner diameter of approximately 12-13 mm. The transitional cooling tube 28, which typically is made of stainless steel, has an inner diameter of approximately 12-13 mm, and adds approximately 300 mm in length to the existing 1500 mm annealer 26.

According to embodiments of the invention, the transitional cooling tube 28 is formed by a number of sections that are separable from one another in a manner that allows passage therethrough of the glob of molten glass from the heated end of the preform 16 during the drop. As shown in Fig. 4, the transitional cooling tube 28 comprises, for example, sections 46a, 46b, which generally are semicircular. However, according to alternative embodiments of the invention, the transitional cooling tube 28 comprises any suitable number of sections that collectively form the transitional cooling tube 28.

According to embodiments of the invention, the annealer 26 is formed by, for example, a pair of sections 48a, 48b that are separable from one another to allow passage therethrough of the glob of molten glass from the heated end of the preform 16 during the drop. Although the annealer 26 is shown as being formed by two sections 48a, 48b, according to alternative embodiments of the invention, the annealer 26 is made of any suitable number of sections that, together, form the annealer 26. Typically, the annealer 26 and its transitional tube 28 are mounted to common mounting plates (shown generally as 47) and open and close simultaneously. Alternatively, it is possible to have the annealer 26 configured to open and close the transition cooling tube 28 separately from the rest of the annealer 26.

According to embodiments of the invention, the separation of one or more components (for example, sections 36a, 36b, 44a, 44b, 46a, 46b, 48a, 48b) is accomplished, for example, manually or using a motor, a plurality of air cylinders or other suitable actuator. Referring again to Fig. 2, the sections of the upper cooling chamber 32 and the lower cooling chamber 34 are opened and closed, for example, simultaneously using, for example, a plurality of air cylinders 52. Similarly, a plurality of air cylinders 54 are used to separate and combine the transitional cooling tube 28 and the rest of the annealer 26.

Referring now to Fig. 5, shown is a simplified block diagram of a method 60 for drawing optical waveguide fiber according to embodiments of the invention. The method 60 includes a first step 62 of providing an optical fiber preform. The next step 64 is to heat the preform in a furnace to a temperature of approximately 2000-2200° Celsius as the preform passes therethrough.

The next step 66 is to draw the optical waveguide fiber from the heated preform as the preform passes through the furnace. As discussed previously herein, as the heated end of the preform softens to the point where optical fiber can be drawn therefrom, the initial portion of the heated end of the preform takes the shape of a relatively large glob of molten glass followed by a progressively thinner stream of molten glass that eventually is sized on the order of an optical fiber.

The next step 68 is to cool the drawn optical fiber exiting the furnace by passing it through a cooling chamber. As discussed previously herein, in accordance with embodiments of the invention, the cooling chamber is configured to allow passage therethrough of the glob of molten glass formed initially by the heated preform. For example, as shown in a step 69, the cooling chamber is opened to allow passage therethrough of the glob during the drop, as discussed previously herein.

Alternatively, the method 60 also includes a step 72 of further cooling the drawn optical fiber, for example, in the transitional cooling tube coupled between the cooling chamber and the annealer. According to embodiments of the invention, the transitional cooling tube and the annealer also are configured to allow the initial glob of molten glass to pass through during the drop. For example, as shown in a step 73, the transitional cooling tube is opened to allow passage therethrough of the glob during the drop, as discussed previously herein.

From the transitional cooling tube, the drawn optical fiber travels through to the annealer. Upon passing through the annealer, the drawn optical waveguide travels through to the coating unit and other remaining stages of the fiber drawing device.

## Claims

1. An apparatus (20) for drawing an optical waveguide, the apparatus comprising:
a furnace (22) for heating an optical waveguide preform passing therethrough; and
a cooling chamber (24) coupled to the furnace for cooling the optical waveguide drawn from the heated optical waveguide preform,
CHARACTERIZED IN THAT
the cooling chamber is configured to allow passage therethrough of a glob of molten glass formed by the heated preform prior to the formation of the optical waveguide and having a diameter larger than that of the optical waveguide.

2. The apparatus as recited in claim 1, wherein the cooling chamber further comprises an upper cooling chamber (32) and a lower cooling chamber (34), wherein the upper cooling chamber includes a conical body having an upper end with a first diameter and a lower end with a second diameter smaller than the first diameter, and wherein the lower cooling chamber includes a tubular body coupled to the lower end of the upper cooling chamber, wherein the upper and lower cooling chambers are configured to allow passage therethrough of the glob of molten glass formed by the preform passing through the furnace.

3. The apparatus as recited in claim 1, wherein the cooling chamber further comprises a conical body having an upper end with a first diameter and a lower end with a second diameter smaller than the first diameter, wherein the conical body is configured to allow passage therethrough of the glob of molten glass formed by the preform passing through the furnace.

4. The apparatus as recited in claim 1, wherein the cooling chamber comprises a plurality of separable sections that fit together around an optical waveguide travel path, wherein at least one of the sections are separated with respect to the other sections around the optical waveguide travel path to allow passage therethrough of the glob of softened glass.

5. The apparatus as recited in claim 4, further comprising an actuator for separating at least one of the plurality of separable sections.

6. The apparatus as recited in claim 5, wherein the actuator includes at least one air cylinder.

7. The apparatus as recited in claim 1, wherein at least a portion of the cooling chamber includes a water cooling arrangement.

8. The apparatus as recited in claim 1, further comprising a transitional cooling tube for coupling the cooling chamber to an annealer in such a way that prevents air from passing between the coupled ends of the cooling tube and the annealer.

9. The apparatus as recited in claim 8, wherein the transitional cooling tube is configured to allow passage therethrough of the glob of molten glass formed by the preform passing through the furnace and the cooling chamber.

10. The apparatus as recited in claim 8, wherein at least a portion of the transitional cooling tube includes a water cooling arrangement.
